## Europäisches Patentamt

## European Patent Office

## Office européen des brevets

(11) Veröffentlichungsnummer: **0 399 356**
**A1**

(12) **EUROPÄISCHE PATENTANMELDUNG**

(21) Anmeldenummer: **90109227.0**

(22) Anmeldetag: **16.05.90**

(51) Int. Cl.5: **B62K 23/06, B62M 25/04, B62L 3/02**

(30) Priorität: **24.05.89 DE 3916919**

(43) Veröffentlichungstag der Anmeldung:
**28.11.90 Patentblatt 90/48**

(84) Benannte Vertragsstaaten:
**BE CH FR GB IT LI NL**

(71) Anmelder: **Ziemer, Peter**
**Rainbrunnenweg 16**
**D-3500 Kassel(DE)**

(72) Erfinder: **Ziemer, Peter**
**Rainbrunnenweg 16**
**D-3500 Kassel(DE)**

(54) Betätigungsvorrichtung.

(57) Die Erfindung betrifft eine am Rennlenker (25) eines Renn- oder Sportrades anbringbare Betätigungsvorrichtung für eine Bremse und eine federbeaufschlagte Gangschaltung, insbesondere für eine Kettenschaltung.

Der vorliegenden Erfindung liegt die Aufgabe zugrunde, die im Handrastbereich angeordnete Betätigungsvorrichtung dahingehend zu verbessern, daß der Schaltvorgang sicherer, einfacher und schneller durchgeführt werden kann, wobei die Bauweise von Sockel (1) und Bremshebel (2) in Größe und Form derjenigen einer herkömmlichen Bremsbetätigungsvorrichtung weitgehend entsprechen soll und der Schalthebel (3) derart angeordnet sein soll, daß weder die gewohnten Handhaltungen am Rennlenker (25) noch die gewohnte Bremsbetätigung beeinträchtigt werden.

Zur Lösung dieser Aufgabe ist ein mit einer gegen die Spannkraft der Rückstellfeder der Gangschaltung wirkenden Hilfsfeder (11) ausgestatteter und in seinen Schaltstellungen durch definierte Rastungen (120) mittels eines Positionierungsmechanismus gehaltener Schalthebel (3) innerhalb einer Ausnehmung des Bremshebels (2) schwenkbar auf einem Bolzen (4) gelagert, auf dem auch der Bremshebel (2) gelagert ist, wobei das Griffteil (3b) des Schalthebels (3) durch einen Durchbruch im Bremshebel (2) aus demselben hervorragt.

Fig. 4   C-C

EP 0 399 356 A1

Die Erfindung betrifft eine Betätigungsvorrichtung nach dem Oberbegriff des Anspruchs 1.

Üblicherweise ist die Bremsbetätigungsvorrichtung eines Renn- und Sportrades am Lenker befestigt, während die Gangschaltbetätigungsvorrichtung am Rahmen, am Lenkervorbau oder separat am Lenker befestigt ist.

Die meisten Renn- und Sporträder sind mit einem Rennlenker ausgestattet. Der Rennlenker besteht bekanntlich aus einem horizontalen geraden, im wesentlichen senkrecht zum Gabelschaft verlaufenden, Rohrabschnitt, welcher mittels Lenkervorbau am Gabelschaft befestigt ist. An den jeweiligen Enden des geraden Rohrabschnitts schließt sich ein um etwa 90 Grad nach vorn, in Fahrtrichtung, gebogener Rohrabschnitt an, dem wiederum ein U-förmig nach unten abgebogener Rohrabschnitt folgt. Im allgemeinen ist in der Mitte bzw. etwas oberhalb des U-förmigen Rohrabschnitts die Bremsbetätigungsvorrichtung angebracht, wobei die Schwenkachse des Bremshebels vor dem Lenkerrohr, in etwa horizontal und quer zur Fahrtrichtung angeordnet ist und das Griffteil des Bremshebels nach unten weist.

Die Form des Rennlenkers in Verbindung mit der beschriebenen Plazierung der Bremsbetätigungsvorrichtung erlaubt eine in Abhängigkeit von Fahrzweck, Fahrbedingungen und Fahrgeschwindigkeit günstige Körperhaltung auf dem Fahrrad, dadurch, daß der Lenker an verschiedenen Bereichen umfaßt werden kann.

Im Hinblick auf eine gute Handhabung des Fahrrades sowie eine günstige aerodynamische Körperhaltung unter Berücksichtigung einer ergonomiegerechten Position ergeben sich am Rennlenker zwei Handhaltungen, die am häufigsten eingenommen werden:
- Die Hände liegen auf dem Sockel der Bremsbetätigungsvorrichtung, wobei die Handinnenflächen auf dem Sockel ruhen, während Daumen und Finger von oben her den Sockel umfassen,
- Die Hände fassen den Rennlenker unten am Ausgang der Krümmung des U-förmigen Rohrabschnitts,
wobei aus der letztgenannten Handhaltung heraus im allgemeinen die Bremse betätigt wird.

Beide Handhaltungen ermöglichen sowohl das Fahren in Sitzposition, als auch das Fahren im Stehen, im sogenannten Wiegetritt.

Üblicherweise muß zum Schalten über eine nicht im Handrastbereich angeordnete Gangschaltbetätigungsvorrichtung die betreffende Hand vom Lenker gelöst werden. Das Lösen einer Hand vom Lenker kann zum einen die Fahrsicherheit negativ beeinflussen, besonders dann, wenn auf einer unebenen Fahrbahn, am Berg und/oder in einer Kurve geschaltet wird, zum anderen kann der Rhythmus unterbrochen werden, was gerade dann der Fall ist, wenn im Wiegetritt gefahren wird. Ferner können bei einem Radrennen in entscheidenden Phasen taktische Nachteile entstehen, dadurch, daß dem Konkurrenten durch die weithin erkennbare Handbewegung hin zur Gangschaltbetätigungsvorrichtung eventuelle Ausreiß- oder Spurtvorbereitungen angekündigt werden.

Es sind bereits am Rennlenker anbringbare Betätigungsvorrichtungen für eine Bremse und eine Gangschaltung bekannt (z.B.: FR 921 292, US 4 100 820, DE 3136922 A1), die eine Betätigung der Gangschaltung gestatten, ohne daß die betreffende Hand vom Lenker genommen werden muß und somit einen leichten, schnellen und sicheren Zugriff ermöglichen. in der FR 921 292 ist dabei auch die Verschwenkbarkeit von Bremshebel und Schalthebel um eine gemeinsame Achse beschrieben. Diese Betätigungsvorrichtungen haben allerdings folgende Nachteile:

Die Betätigung einer im Handrastbereich angebrachten Gangschaltbetätigungsvorrichtung verlangt andere Greifarten, als eine Gangschaltbetätigungsvorrichtung herkömmlicher Anordnung am Rahmen, bei welcher im allgemeinen das Griffteil des Schalthebels über den gesamten Stellbereich hinweg weitgehend in Richtung des Fahrers ausgerichtet ist. Beim Schalten der herkömmlichen Anordnung wird zweckmäßigerweise das Griffteil des Schalthebels vom Griffende her mit der Daumeninnenseite - Daumenlängsachse parallel zur Längsachse des Griffteils - und mit angewinkeltem Zeigefinger umfaßt und um die Schwenkachse gedreht. Diese Art des Umfassens des Schalthebels gestattet ein präzises Schalten in den gewünschten Gang, auch dann, wenn gegen die Spannrichtung der Rückstellfeder der Gangschaltung, d.h. gegen relativ hohe Betätigungskräfte, und ohne exakt definierte Rastungen des Schalthebels geschaltet wird, weil sich der Schalthebel durch diese Greifart in beide Richtungen gleichermaßen präzise und schnell bewegt läßt.

Dennoch sind bereits bei dieser herkömmlichen, in bezug auf Schaltgenauigkeit günstigen Anordnung der Gangschaltbetätigungsvorrichtung Maßnahmen, wie Einsatz einer der Spannkraft der Rückstellfeder der Gangschaltung entgegenwirkenden Hilfsfeder (z.B.: DE 36 25 507 A1) und Einsatz von definierten Rastungen (z.B.: DE 37 27 505 A1), ergriffen worden, um den Schaltvorgang zu erleichtern.

Die beschriebene Art des Umfassens kann allerdings, wie erwähnt, bei den bereits bekannten, am Rennlenker angebrachten Betätigungsvorrichtungen, die gerade bezwecken, daß die betreffende Hand nicht vom Lenker genommen werden muß, nicht angewendet werden.

Die Schaltbetätigungen mittels der Ausführungen nach der FR 921 292 und nach der US 4 100 820 bedingen Greifarten, über welche niedrigere Körperkräfte aufgebracht werden können und erlauben somit nur, gegenüber der herkömmlichen Schaltweise, niedrigere Betätigungskräfte und müßten durch exakt definierte Rastpositionen des Schalthebels für die einzelnen Gänge unterstützt werden, um die Schaltgenauigkeit und die Schaltgeschwindigkeit, die nicht nur vom leichten, schnellen und sicheren Zugriff, sondern auch von der Zeit zum Einstellen des gewünschten Ganges abhängen, im Vergleich zur herkömmlichen Gangschaltbetätigungsvorrichtung beizubehalten.

Hinsichtlich der Sicherheit gegen Fehlschaltungen und der erforderlichen Mindestabstände zwischen den Betätigungteilen weisen die Ausführungen gemäß der genannten DE 31 36 922 A1 und der genannten US 4 100 820 folgende Nachteile auf:

Der jeweilige Schalthebel ist zwischen dem U-förmigen Rohrabschnitt des Lenkers und dem Griffteil des Bremshebels angeordnet, so daß zum einen ein Umfassen des Sockels der Vorrichtung in der bereits beschriebenen Weise nicht möglich ist, zum anderen kann die Bewegung der Finger hin zum Griffteil des Bremshebels behindert sein, bzw. es können bei der betreffenden Bewegung Fehlschaltungen ausgelöst werden.

Die in der DE 31 36 922 A1 beschriebene Schrittschalteinrichtung erlaubt nur ein schnelles Schalten in einen dem eingelegten Gang unmittelbar folgenden Gang. Gerade in der Rennpraxis, besonders im Hinblick darauf, daß bereits 7- und 8-fach Zahnkränze gefahren werden und zum Teil häufig geschaltet werden muß, erweist sich ein Durchschalten über die einzelnen Gänge hinweg bis zum gewünschten Gang als äußerst hinderlich.

Der vorliegenden Erfindung liegt demgemäß die Aufgabe zugrunde, eine am Rennlenker im Handrastbereich anbringbare Betätigungsvorrichtung für eine Bremse und eine Gangschaltung dahingehend zu verbessern, daß der Schaltvorgang sicherer, einfacher, schneller sowie unter renntaktischem Aspekt unauffälliger und ohne Rhythmusunterbrechung durchgeführt werden kann, wobei die Bauweise von Sockel und Bremshebel in Größe und Form derjenigen einer herkömmlichen, am Rennlenker angeordneten Bremsbetätigungsvorrichtung weitgehend entsprechen soll und der Schalthebel derart angeordnet sein soll, daß weder die gewohnten Handhaltungen am Rennlenker noch die gewohnte Bremsbetätigung beeinträchtigt werden.

Diese Aufgabe wird bei einer gattungsgemäßen Betätigungsvorrichtung durch die kennzeichnenden Merkmale des Anspruchs 1 gelöst.

Bei dem Positionierungsmechanismus, der den Schalthebel in seinen Schaltstellungen durch definierte Rastungen hält, handelt es sich um eine im Sockel in einer in etwa radial zur Schalthebelschwenkachse verlaufenden Bohrung geführte und durch eine Rastfeder beaufschlagte Rastkugel, die mit einer an der Schalthebelnabe umfangsseitig in einem Rastersegment eingebrachten, dem jeweiligen Gang zugeordneten Einkerbung in Eingriff gebracht wird.

Die Umschaltvorrichtung erlaubt ein Schalten mittels Positionierungsmechanismus bzw. ein Schalten mittels Reibmechanismus, das dann erforderlich ist, wenn minimale Störungen in Form von Dehnung am Bowdenzug oder gerinfügigen Verstellungen an der Gangschaltung auftreten.

Der im Fall des eingeschalteten Positionierungsmechanismus durch die Sperrkraft der federbeaufschlagten Rastkugel erzeugte und im Fall des eingeschalteten Reibungsmechanismus durch die Reibkraft erzeugte Drehwiderstand übersteigt jeweils die Wirkung der aus der Rückstellfeder der Gangschaltung und der Hilfsfeder resultierenden Kraft.

Die Betätigung des Bremshebels entspricht der Betätigung eines Bremshebels einer herkömmlichen Bremsbetätigungsvorrichtung. Der Schalthebel läßt sich bedingt durch die Hilfsfeder mit in etwa gleicher Betätigungskraft in beide Richtungen, ausgehend von den beiden beschriebenen Handhaltungen am Rennlenker, mit einem Finger oder mit mehreren Fingern betätigen, während die Umschaltvorrichtung mittels einer Fingerkuppe betätigbar ist.

Die Vorteile der vorliegenden Erfindung gegenüber dem gegenwärtigen Stand der Technik sind in der erfindungsgemäßen Lösung der gestellten Aufgabe zu finden.

Ein Ausführungsbeispiel der Erfindung ist in Zeichnungen dargestellt und wird im folgenden näher beschrieben. Es zeigen

Fig. 1 eine Seitenansicht des Ausführungsbeispiels einer erfindungsgemäßen Betätigungsvorrichtung,

Fig. 2 eine Vorderansicht gemäß der in Fig. 1 bezeichneten Ansicht A,

Fig. 3 eine Ansicht des Querschnitts gemäß der in Fig. 2 bezeichneten Schnittebene D-D,

Fig. 4 eine Ansicht des Querschnitts gemäß der in Fig. 2 bezeichneten Schnittebenen C-C bzw. B-B,

Fig. 5 eine vergrößerte Detailansicht des Querschnitts gemäß der in Fig. 4 bezeichneten Schnittebene E-E,

Fig. 6 eine vergrößerte Detailansicht des Querschnitts gemäß der in Fig. 4 bezeichneten Schnittebene F-F bei eingeschaltetem Positionierungsmechanismus,

Fig. 7 eine vergrößerte Detailansicht des Querschnitts gemäß der in Fig. 4 bezeichneten Schnittebene F-F bei ausgeschaltetem Positionierungsmechanismus.

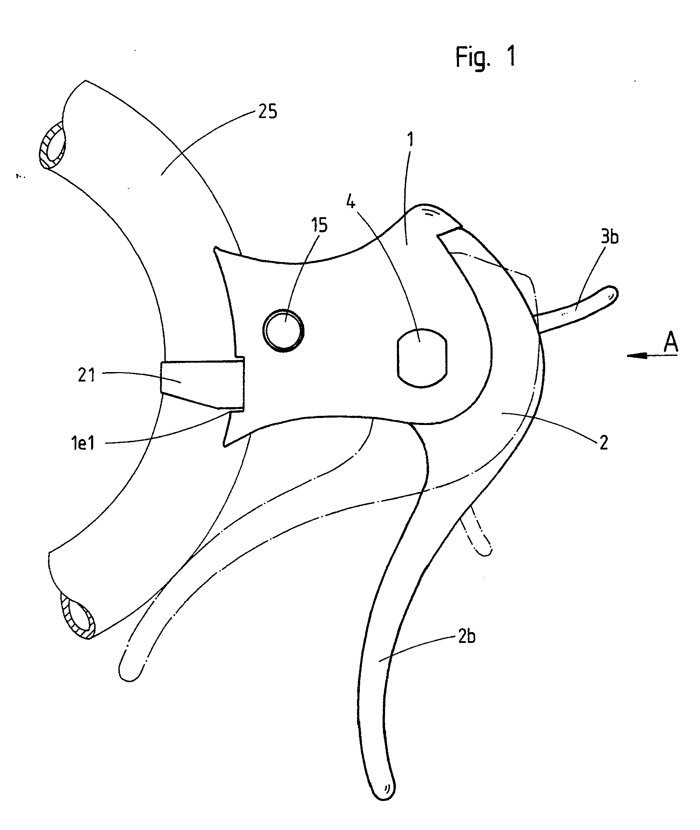

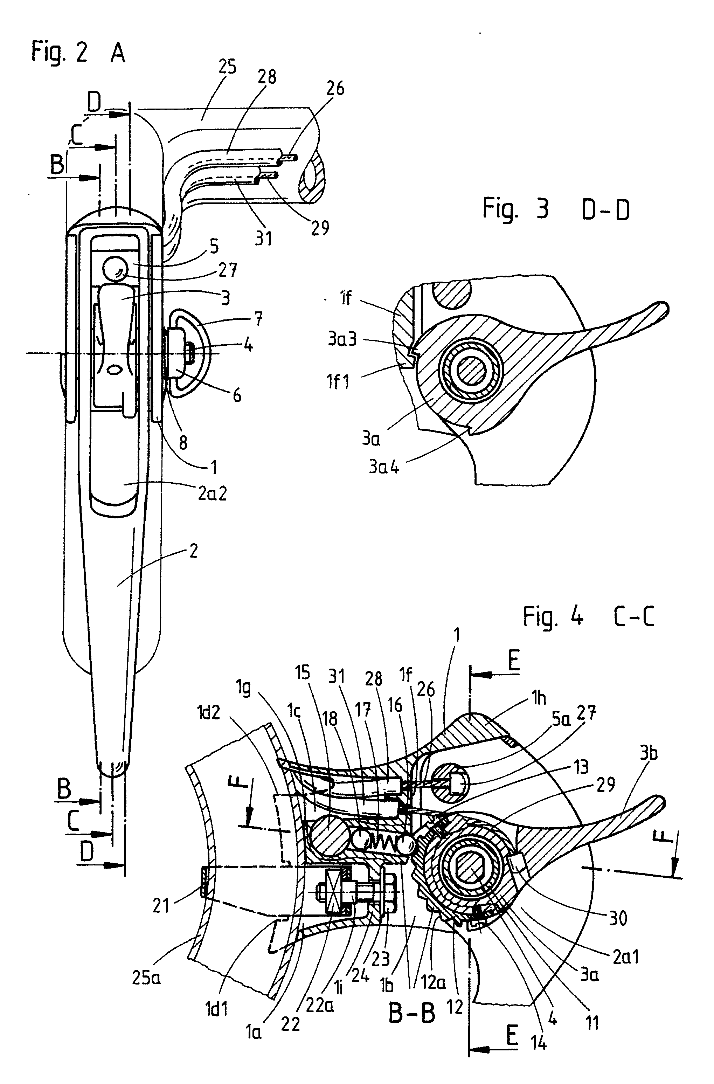

Der Sockel 1 stellt das Basisbauteil für die zur Verwendung an einem Rennlenker 25 vorgesehene Betätigungsvorrichtung dar (Fig. 1, Fig. 4).

Die Breite des Sockels 1 entspricht in etwa dem Außenradius des Lenkerrohres 25a. Die Kontur der Rückseite , die Seite, an welcher die Vorrichtung am Rennlenker 25 aufliegt, ist der äußeren Kontur des U-förmigen Rohrabschnitts des Lenkerrohres 25a angepaßt.

Mit Hilfe der Befestigungsschelle 21, die von vorn her das Lenkerrohr 25a zu etwa 3/4 dessen Umfangs umschlingt, ist der Sockel 1 am Rennlenker 25 montiert:

Die beiden Enden der Befestigungsschelle 21, die zunächst derart nach außen abgebogen sind, daß sie parallel verlaufen, sind schließlich rechtwinklig nach innen abgewinkelt und überlappen sich. Die Überlappung weist eine Bohrung auf. In diese Bohrung ist von der Innenseite der Befestigungsschelle 21 her der bohrungsseitig rundzapfenförmig ausgebildete Absatz 22a der Vierkantmutter 22 gesteckt. Die Vierkantmutter 22 ist dabei von den beiden parallelen Abschnitten der Befestigungsschelle 21 derart eingeschlossen, daß ein Drehen der Vierkantmutter 22 durch Formschluß verhindert ist. Die Befestigungsschelle 21 ragt zusammen mit der Vierkantmutter 22 in die Ausnehmung 1a, die sich im hinteren, unteren Bereich des Sockels 1 befindet, hinein.

Mittels der Sechskantschraube 23, die in Verbindung mit der Unterlegscheibe 24 von der vorderen Ausnehmung 1b des Sockels 1 her durch das Durchgangsloch in der Wand 1i, die die vordere Ausnehmung 1b von der hinteren, unteren Ausnehmung 1a trennt, gesteckt ist und mit der Vierkantmutter 22 verschraubt ist, wird der Sockel 1 beim Festdrehen auf das Lenkerrohr 25a gezogen, wobei die Außenflanken der Befestigungsschelle 21 in etwa am Übergang von dem kreisrunden Abschnitt zum jeweiligen geraden Abschnitt nach außen an die Seitenwände 1d, 1e im Bereich der Aussparungen 1d1, 1e1 gedrückt werden, wodurch wiederum die Befestigungsschelle 21 über den gesamten Bereich ihres kreisrunden Abschnitts auf das Lenkerrohr 25a gezogen wird und somit ein Drehen um das Lenkerrohr 25a sowie ein Rutschen unterbindet.

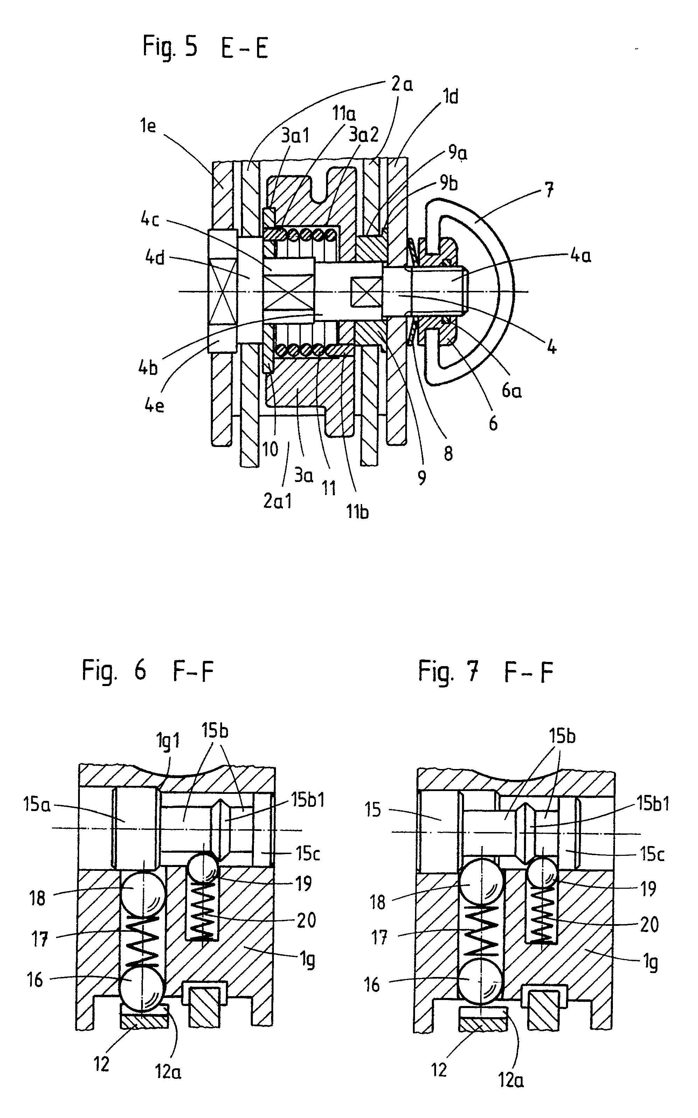

Im vorderen Bereich des Sockels 1, in der nach vorn und unten offenen Ausnehmung 1b, ist der Bolzen 4, um den der Bremshebel 2 und der Schalthebel 3 in Ebenen senkrecht zur Bolzenlängsachse geschwenkt werden, in etwa horizontal und quer zur Fahrradlängsachse eingebaut (Fig.4). Der Bolzen 4 ist in fünf Bolzenabsätze aufgeteilt (Fig.5):

Der, ausgehend von der zur Rennlenkermitte hinweisenden Seite, erste Bolzenabsatz 4a ist in seinem vorderen Bereich mit einem Außengewinde versehen. Es folgen die weiteren vier Bolzenabsätze, deren jeweiliger Durchmesser größer ist, als der des vorherigen Bolzenabsatzes.

Der zweitkleinste Bolzenabsatz 4b, in seinem Bereich nächst dem kleinerem Bolzenabsatz 4a, sowie der mittlere Bolzenabsatz 4c und der größte Bolzenabsatz 4e sind jeweils mit Abflachungen versehen zum Zweck einer formschlüssigen Verbindung mit den jeweils anliegenden Teilen.

Der Bolzen 4 ist radial fixiert einerseits durch den kreisrunden, dem Außengewinde folgenden, Bereich des ersten Bolzenabsatzes 4a, welcher in dem in der Rennlenkermitte näherliegenden Seitenwand 1d befindlichen, ebenfalls kreisrunden, Loch steckt und andererseits durch den Bolzenabsatz 4e mit dem größten Durchmesser, der in dem in der, bezogen auf die Rennlenkermitte, äußeren Seitenwand 1e befindlichen Loch steckt, dessen Kontur der Kontur des dortigen Bolzenabsatzes 4e entspricht, wodurch ein Drehen des Bolzens 4 durch Formschluß verhindert wird.

Der Bremshebel 2 ist innerhalb der vorderen Ausnehmung 1b des Sockels 1 über die Bremshebelnabe 2a zum einen durch den zweitgrößten, kreisrunden Bolzenabsatz 4d und zum anderen durch den kleineren Absatz 9a der außen kreisrunden Buchse 9, die, durch Formschluß drehgesichert, auf dem zweitkleinsten Bolzenabsatz 4b sitzt, schwenkbar gelagert.

Loses Anliegen der Stirnseiten der Bremshebelnabe 2a an den jeweiligen Stirnseiten des größten Bolzenabsatzes 4e bzw. des größeren Absatzes 9b unterbindet die axiale Bewegung des Bremshebels 2. Gleichzeitig wird dadurch eine stirnseitige Berührung mit dem Schalthebel 3 verhindert.

Die Bremshebelnabe 2a weist eine zur Mittelwand 1f des Sockels 1 hin offene Ausnehmung 2a1 sowie einen Durchbruch 2a2 nach vorne auf (Fig. 2, Fig. 4).

Das Griffteil 2b des Bremshebels 2 ragt in etwa vertikal nach unten gerichtet aus der vorderen Ausnehmung 1b des Sockels 1 und wird bei Betätigung zum U-förmigen Lenkerrohrabschnitt hin geschwenkt, wobei das Griffteil 2b und der untere Bereich der vorderen Ausnehmung 1b derart ausgeformt sind, daß der genannte Bereich des Lenkerrohres 25a als Anschlag dient (Fig. 1, Fig. 4).

Im unbetätigten Zustand dient das Unterteil des am vorderen, oberen Bereich befindlichen, kuppelförmig ausgebildeten Sockelteilstücks 1h des Sockels 1 als Anschlag des Bremshebels 2 - (Fig. 4).

Im oberen Bereich der Bremshebelnabe 2a ist der Bremszugaufnehmerbolzen 5 mit seiner Längsachse parallel zum Bolzen 4 in zwei Bohrungen im Bremshebel 2 drehbar gelagert. Der Bremszugaufnehmerbolzen 5 weist drei Absätze auf, wobei der mittlere Absatz 5a den größten Durchmesser hat und mit den beiden Stirnseiten an der jeweiligen Seitenwand des Bremshebels 2 anliegt, wodurch die axiale Verschiebung verhindert wird. Der mittlere Absatz 5a ist senkrecht zur Längsachse mit einem Durchgangsloch und einer Zylindersenkung versehen, durch die von der Senkungsseite her der Bremszug 26 geführt wird, wobei der Bremszugnippel 27 in der Zylindersenkung steckt (Fig. 2, Fig. 4).

Der Bremszug 26 ist durch das in der Mittelwand 1f des Sockels 1 befindliche Durchgangsloch gezogen und steckt in der Bremszugaußenhülle 28, welche am Lenkerrohr 25a entlang verlegt ist und, durch die Aussparung 1d2 an der Seitenwand 1d des Sockels 1 sowie durch die hintere, obere Ausnehmung 1c des Sockels 1 verlaufend, stirnseitig an der Rückseite der Mittelwand 1f in einer Senkung anliegt (Fig. 4).

Innerhalb der Ausnehmung 2a1 der Bremshebelnabe 2a ist der Schalthebel 3 drehbar sowie in axialer Richtung nicht verschiebbar auf dem Bolzen 4 zweifach gelagert dadurch, daß auf der einen Seite die außen kreisrunde Führungsscheibe 10, die durch Formschluß drehgesichert auf dem mittleren Bolzenabschnitt 4c gesteckt ist und an der Stirnseite des zweitgrößten Bolzenabschnitts 4d anliegt, umfangsseitig teilweise in der in die Stirnseite der Schalthebelnabe 3a eingebrachten Zylindersenkung 3a1 steckt und daß auf der anderen Seite die Schalthebelnabe 3a auf dem zweitkleinsten, kreisrunden Bolzenabsatz 4b gesteckt ist und stirnseitig an der Buchse 9 anliegt (Fig. 5).

Innerhalb der der Zylindersenkung 3a1 folgenden kleineren Zylindersenkung 3a2 ist die als Schenkelfeder ausgebildete Hilfsfeder 11, deren abgewinkelte Federenden 11a, 11b in den Bohrungen der drehgesicherten Führungsscheibe 10 bzw. der Schalthebelnabe 3a stecken, derart eingespannt, daß sie der Rückstellfeder der Gangschaltung entgegenwirkt.

Der Schaltungszug 29 zur Gangschaltung ist von unten her in das vor dem Bolzen 4 in den Schalthebel 3 eingelassene Durchgangsloch eingezogen, wobei der Schaltungszugnippel 30 in einer Zylindersenkung steckt. Der Schaltungszug 29 ist weitergeführt über die mit, bezüglich der Schwenkachse, konstantem Radius ausgebildete Rille im Schalthebel 3 und durch das in der Mittelwand 1f des Sockels 1 unter dem Durchgangsloch für den Bremszug 26 befindliche Durchgangsloch und steckt in der Schaltungszugaußenhülle 31, welche unterhalb der Bremszugaußenhülle 28, derselbigen entsprechend, verlegt ist (Fig. 4).

Ein in etwa auf der Höhe des Bolzens 4 aus der Mittelwand 1f des Sockels 1 herausragender Zapfen 1f1 als Anschlag für zwei am Schalthebel 3

befindliche Absätze 3a3, 3a4 definiert den Schwenkbereich des Schalthebels 3 (Fig. 3).

Das Griffteil 3b des Schalthebels 3 ragt über den gesamten Schwenkbereich hinweg durch den Durchbruch 2a2 im Bremshebel 2 nach vorn. Der Durchbruch 2a2 im Bremshebel 2, der Schalthebel 3 sowie die jeweiligen Anschläge 3a3, 3a4 sind derart ausgestaltet bzw. angeordnet, daß eine gegenseitige Beeinflussung zwischen Brems- und Schalthebel über deren Schwenkbereiche hinweg ausgeschlossen ist (Fig. 1, Fig. 2, Fig. 3).

Die mit dem C-förmigen Betätigungsgriff 7 und dem Sicherungsring 6a ausgestattete Einstellmutter 6, die auf den Bolzen 4 geschraubt ist und über die Teilerfeder 8 an der Seitenwand 1d des Sockels 1 anliegt, fixiert den Bolzen 4 in Verbindung mit der Führungsscheibe 10, der Schalthebelnabe 3a, der Buchse 9 und der Seitenwand 1d in axialer Richtung (Fig. 5).

Auf der der Mittelwand 1f des Sockels 1 zugewandten Seite der Schalthebelnabe 3a ist das in etwa drittelkreisförmige Rastersegment 12 mittels zweier Schrauben 13, 14 umfangsseitig neben der Rille für den Schaltungszug 29 aufgeschraubt. Das Rastersegment 12 weist an seinem Umfang mehrere Einkerbungen 12a auf, deren Abstände der Gangschaltcharakteristik und den Abständen zwischen den zu schaltenden Zahnrädern sowie dem Schalthebelschwenkbereich und dem Rillenradius angepaßt sind und deren Anzahl sich nach der Anzahl der zu schaltenden Zahnräder richtet (Fig. 4).

Über den Umschaltbolzen 15, der kurzer ist als der Sockel 1 breit und der mittels seiner äußeren Bolzenabsätze 15a, 15c in einer Bohrung, die einen Bohrungsabsatz 1g1 aufweist, in der Wand 1g, die die hintere, obere Ausnehmung 1c des Sockels von der hinteren, unteren Ausnehmung 1a trennt, horizontal und parallel zum Bolzen 4, um die Differenz zwischen der Sockelbreite und seiner Länge axial verschiebbar, eingebaut ist, kann der Positionierungsmechanismus ein- bzw. ausgeschaltet werden (Fig. 6, Fig. 7).

Bei eingeschaltetem Positionierungsmechanismus, das heißt, der größte Bolzenabsatz 15a schließt die Öffnung der Bohrung, in der die Führungskugel 18, die Rastfeder 17 und die Rastkugel 16 in Längsrichtung verschiebbar eingelegt sind, rastet bei Betätigung des Schalthebels 3 zum Zweck der Positionierung des Schalthebels 3 und somit der Gangschaltung die durch die Rastfeder 17 beaufschlagte Rastkugel 16 in die für den entsprechenden, gewünschten Gang vorgesehene Einkerbung 12a im Rastersegment 12. Dabei drückt die Rastfeder 17 mit der Gegenkraft über die Führungskugel 18 auf den größten Bolzenabsatz 15a des Umschaltbolzens 15. In diesem Zustand wird der Umschaltbolzen 15 axial fixiert durch die mit der Bolzenarretierfeder *20* beaufschlagten Bolzenarretierkugel *19*, die schräg auf den im mittleren Bolzenabsatz *15b* aufgesetzten Bund *15b1* drückt, so daß die Stirnseite des größten Bolzenabsatzes *15a* auf die Stirnseite des Bohrungsabsatzes *1g1* gedrückt wird. Die äußere Stirnseite des dem größten Bolzenabsatz *15a* gegenüberliegenden Bolzenabsatzes *15c* schließt dabei bündig mit der Seitenwand *1d* des Sockels *1* ab (Fig. 6).

Bei ausgeschaltetem Positionierungsmechanismus schließt der größte Bolzenabsatz *15a* bündig mit seiner äußeren Stirnseite mit der Seitenwand *1e* des Sockels *1* ab, wodurch die bolzenseitige Öffnung der Bohrung freigelegt ist und der mittlere, kleinere, in seiner Radiusdifferenz zum größten Bolzenabsatz *15a* dem Führungskugelradius angepaßte Bolzenabsatz *15b* das Herausfallen der Führungskugel *18*, der Rastfeder *17* und der Rastkugel *16* verhindert. In diesem Zustand ist der Umschaltbolzen *15* axial dadurch fixiert, daß die federbeaufschlagte Bolzenarretierkugel *19* auf der einen Seite am Bund *15b1* und auf der anderen Seite am Bolzenabsatz *15c* bündig anliegt. Durch die durch die Freilegung der Öffnung mögliche Verschieblichkeit der Führungskugel *18* befindet sich die Rastfeder *17* auslegungsbedingt im entspannten Zustand, wodurch nun die Führungskugel *18*, die Rastfeder *17* und die Rastkugel *16* lose in der Bohrung liegen (Fig. 7).

Der im ausgeschaltetem Positionierungsmechanismus zur Vermeidung des Verstellens des Schalthebels *3* aufzubringende, durch Reibkraft erzeugte, Drehwiderstand wird über die in Verbindung mit der Tellerfeder *8* an der Seitenwand *1d* abgestützte Einstellmutter *6* eingestellt, die die undrehbar gelagerte Führungsscheibe *10* über den Bolzen *4* in die Zylindersenkung *3a1* des Schalthebels *3* drückt (Fig. 5).

**Ansprüche**

1. Am Rennlenker eines Renn- oder Sportrades im Handrastbereich anbringbare Betätigungsvorrichtung für eine Bremse und eine federbeaufschlagte Gangschaltung, insbesondere für eine Kettenschaltung, im wesentlichen bestehend aus einem mittels der Befestigungsteile (21), (22), (23), (24) am Rennlenker (25) befestigbaren Sockel (1), einem in der nach vorn und unten offenen Ausnehmung (1b) im Sockel (1), in etwa horizontal und senkrecht zur Fahrradlängsachse angeordneten Boizen (4), einem Bremshebel (2) und einem Schalthebel (3), *dadurch gekennzeichnet, daß* der Schalthebel (3) mit einer gegen die Spannkraft der Rückstellfeder der Gangschaltung wirkenden Hilfsfeder (11) ausgestattet ist und daß der Schalthebel (3) in seinen Schaltstellungen durch definierte Rastungen mittels eines rastfederbeaufschlagten Positionierungsmechanismus gehalten wird und daß der Schalthebel (3) und der Bremshebel (2) auf dem Bolzen (4) in bezug auf den Sockel (1), in Ebenen senkrecht zur Bolzenlängsachse, schwenkbar gelagert sind und daß die Schalthebelnabe (3a) innerhalb einer Ausnehmung (2a1) des Bremshebels (2) mittig angeordnet ist und daß das Griffteil (3b) des Schalthebels (3) durch einen Durchbruch (2a2) im Bremshebel (2) aus demselben hervorragt.

2. Betätigungsvorrichtung nach Anspruch 1, *dadurch gekennzeichnet, daß* innerhalb des Sok-kels (1) eine Umschaltvorrichtung zum Ein- und Ausschalten des Positionierungsmechanismus eingebaut ist, die einen axial verschieblichen, in seinen Schaltstellungen durch eine durch die Bolzenarretierfeder (20) beaufschlagte Bolzenarretierkugel (19) gehaltenen Umschaltbolzen (15) aufweist, über dessen Bolzenabsatz (15a) mittels einer Führungskugel (18) die Rastfeder (17) in den gespannten Zustand versetzt wird, um den Positionierungsmechanismus einzuschalten und über dessen weiteren Bolzenabsatz (15b) die Rastfeder (17) in den entlasteten Zustand versetzt wird, um den Positionierungsmechanismus auszuschalten.

3. Betätigungsvorrichtung nach Anspruch 2, *dadurch gekennzeichnet, daß* ein Reibmechanismus vorgesehen ist, bestehend aus einer auf den Bolzen (4) aufgeschraubten Einstellmutter (6), die über eine Tellerfeder (8) an der Außenseite der Seitenwand (1d) des Sockels (1) abgestützt ist und über den undrehbar gelagerten Bolzen (4) eine Führungsscheibe (10) stirnseitig auf die über eine Buchse (9) an der Innenseite der Seitenwand (1d) abgestützte Schalthebelnabe (3a) drückt, um die für den zum Halten der Schaltstellung auf den Schalthebel (3) bei ausgeschaltetem Positionie-rungsmechanismus aufzubringenden Drehwider-stand notwendige Reibkraft zu erzeugen.

Fig. 1

Fig. 2  A

Fig. 3  D-D

Fig. 4  C-C

Fig. 5   E-E

Fig. 6   F-F

Fig. 7   F-F

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | EP - A1 - 0 067 692 (SHIMANO) * Fig. 6 * -- | 1 | B 62 K 23/06 B 62 M 25/04 B 62 L 3/02 |
| A | US - A - 3 478 617 (TETSUO) * Fig. 1 * -- | 1 | |
| D,A | DE - A1 - 3 136 922 (SMOLIK) * Fig. 3 * -- | 1 | |
| D,A | US - A - 4 100 820 (EVETT) * Fig. 1 * -- | 1 | |
| D,A | FR - E - 57 807 (NAVET) * Fig. * -- | 1 | |
| A | DE - A1 - 3 731 305 (SACHS-HURET) * Zusammenfassung * -- | 1 | |
| D,A | DE - A1 - 3 727 505 (CAMPAGNOLO) * Fig. 2 * -- | 1 | |
| D,A | DE - A1 - 3 625 507 (SHIMANO) * Fig. 1 * ---- | 1 | |

**RECHERCHIERTE SACHGEBIETE (Int Cl⁵)**

B 62 K
B 62 L
B 62 M
G 05 G

Der vorliegende Recherchenbericht wurde für alle Patentansprüche erstellt.

| Recherchenort WIEN | Abschlußdatum der Recherche 18-07-1990 | Prüfer BAUMGARTNER |
|---|---|---|